# EUROPEAN PATENT APPLICATION

(11) **EP 1 657 937 A2**
(43) Date of publication of application: **17.05.2006**
(21) Application number: 05024517.4
(22) Date of filing: 10.11.2005
(51) Int. Cl.: H04Q 3/00, H04Q 7/38

(54) **Method and system for selective call completion**

(30) Priority: 12.11.2004 US 627802 P; 11.10.2005 US 247762
(71) Applicant: TELEFONAKTIEBOLAGET LM ERICSSON (publ), 164 83 Stockholm (SE)
(72) Inventor: Wouterse, Wim, 5045 TP Tilburg (NL); Bruins, Lucien, 4254 XA Sleeuwijk (NL); Noldus, Rigier August Caspar Joseph, 5045 ML Tilburg (NL); Hutschemaekers, Mathieu, 5307 HM Poederoijen (NL)
(74) Representative: Tonscheidt, Andreas

(57) **Abstract**

Call completion menus are established by the telecommunications provider (of the called party) who may assign a number of options for the menu of a certain subscriber (called party) based on the subscription of the called party. The available options depend on the state of the user equipment of the called party such as: called party is busy, called party is not reachable or called party does not answer. The available options also are dependent on the profile of the user equipment, the user (called party), the calling party and the network conditions/attributes.

## Description

### Field of the invention

The present invention relates generally to the telecommunications field and, more particularly, to a method, a node and a system for completing a call, not previously completed, to a mobile station in a cellular telecommunications network.

### Background of the invention

There are a variety of reasons that will prevent a telephone call from being completed. For example, when the party being called (the 'called party') is a mobile subscriber, the call may fail because the called party's mobile station (MS) is inactive for some reason. For example, the MS may be turned off, its battery may be dead, or it may be located in an area that is shielded from radio reception.

In addition, in both wireless and wireline telephone systems, a call may fail because the called party is currently using his MS (i. e., the user is busy); or because the called party may not be near the MS, or is otherwise unable to answer the MS at the time the call is made (i.e., the call is not completed due to no response).

When a telephone call is not completed, the party making the call (the "calling party") can, of course, simply hang up and call again at a later time. This is generally not a very satisfactory solution to the problem, however, as the calling party usually will not know when the circumstances that prevented the original call from being completed have been corrected or changed. As a result, it is not uncommon that the calling party may have to make several call attempts before the call is finally completed or until the calling party abandons the effort.

Recognizing the above problem, and in an effort to provide greater convenience to their subscribers, and to increase revenues as well; both wireline and wireless telephone service providers offer a variety of supplementary services to their subscribers. For example, both wireless and wireline systems offer voice mail services; and if the called party subscribes to such a service, an uncompleted call will be automatically routed to voice mail. A disadvantage of this service, however, is that the called party may not access his voice mail for a period of time, and this can cause problems in situations where the purpose of the call was time-sensitive. Another possibility is that the called party may access the voicemail but not return the call.

Both wireline and wireless telephone service providers also offer various types of callback services for use in situations where a call is not completed due to the line being busy or because of no response. When the line is busy, the callback services are typically designed to effect a callback when the line is no longer busy, i.e., when the called party terminates the current call and thus becomes available for the callback. This is a reasonable approach when the call is not completed because of a busy condition, because it is likely that the called party is present and available when the callback is made inasmuch as a current call has just been terminated.

Such an approach is not appropriate, however, when the call could not be established due to no response by the called party. In such a situation, the probable reason that the call was not completed is that the called party is not near the phone or MS or is otherwise not available to answer the phone or MS. In order for a callback feature to be at all effective when the call could not be established due to no response, the state of the called party must first be observed and determined. Specifically, it must first be determined that the called party is, at least probably, near the phone or MS so that when the callback is made, the called party will be available for the call. One indication of the presence of the called party is that he uses his telephone or MS. When he has just used the phone or MS to make or receive a call, it is likely that he is available and the callback is automatically made as soon as he hangs up. Indications that the called party is available for receiving a call also include, but are not limited to, sending an SMS, sending a USSD message or changing personal settings in an HLR.

A disadvantage of this approach, however, is that it may be some time before the called party uses the telephone or MS. There may also be a time limit on the duration of the wait for the call to be completed, or the calling party may cancel the order to have the call completed before it can be completed.

In general, whenever a call is not completed, the service provider loses revenue (in systems where billing commences when the called party answers the call. In addition, any unsuccessful attempt to complete a call also involves the use of hardware, software and radio resources, again without any revenue being received by the service provider. Also, as indicated above, there is at least, substantial inconvenience to both the calling party and the called party when a desired call is not completed.

US 5,793,858 patent discloses a method that offers callers a limited menu of call completion services when the call encounters a busy or no-answer condition. It provides in-session activation capability from DTMF (Dual Tone Multi-Frequency) and dial-pulse sets that enable callers to activate the services without having to hang up. The method is intended for residential and business end-users with residential lines, business lines, or PBX lines.

There is therefore a need in the art to provide for the generation of a more complete call completion service for completing a call to a mobile station within a mobile communications network comprising multiple interconnected networks.

### Summary of the invention

To address the above-discussed deficiencies of the prior art, it is a primary object of the present invention to provide for generation of a more complete call completion service for completing a call to a mobile station within a mobile communications network. The mobile communication network comprises multiple interconnected networks, and may utilize a circuit switched connection and a packet switched connection. Generation of call completion data is dependent on parameters such as the state of the called party, attributes of the calling party and network conditions in a situation where a previous call is not completed due to "no response" of the called party. It is a further object of the invention to increase the efficiency of use of telecommunication resources as unsuccessful attempts to complete a call involves the use of telecommunication resources without any useful result.

In a first aspect the present invention provides a method of selective call completion of a call that could not be established to a User Equipment (UE), by a service control point (SCP) in an enhanced telecommunications network (CN) said enhanced network comprising a circuit switched network and a packet-switched network wherein said method comprises the steps of defining a called party profile and a profile of a UE associated with the called party as well as defining a profile of the calling party and a profile of a UE associated with the calling party. After receiving a first service request from a calling party, the first service request being triggered by a state of the UE associated with the called party wherein the calling party is unable to achieve a live connection with the called party a group of call completion options are generated based on the profiles of the called party, the calling party and the UE associated with the calling party. Subsequently a group of call completion options are sent to the calling party where after the SCP receives a second service request from the calling party, wherein the second service request is a selection of one of the group of call completion options.

Generation of call completion data is dependent on parameters such as the state of the called party, attributes of the calling party and network conditions in a situation where a previous call is not completed due to "no response" of the called party.

Call completion menus are established by the telecommunications provider (of the called party) who may assign a number of options to the menu associated with a certain subscriber (the called party) based on the subscription of the called party. The available options depend on the state of the called party such as: called party is busy, called party is not reachable or called party does not answer. Each state of the called party has associated options that depend on:
- which options the called party is subscribed to such as reception of SMS, voice mail,
- whether the calling and/or the called party are roaming,
- whether it is allowed to present the calling line identification (CLI) of the calling party,
- whether the calling party belongs to the network of the operator of the called party, and
- the user equipment capabilities of the calling and called party. Certain options can be added, removed or modified to the menu by the called party, the calling party, and the telecommunications provider via password protected websites.

Depending on the capabilities of the user equipment of both calling party and called party, generated menu information sent to the user equipment can be in the form of an audio message and/or video message and/or data message (SMS). The call completion menu received by the calling party allows him/her to make a choice on how to contact the called party.

In a second aspect the invention provides a system in a telecommunications network for providing selective call completion between a calling party and a called party, comprising a Gateway Mobile Services Switching Center (GMSC), a Visitor Mobile Services Switching Centre and a Visitor Location Center (VMSC/VLR); a Service Switching Point (SSP) and Service Control Point (SCP), wherein a Core Network (CN) within the telecommunications network system, may also comprise multiple interconnected networks, an enhanced communication connection comprising a circuit switched connection and a packet-switched connection.
The system further comprises means for defining a called party profile and a profile of a user equipment (UE) associated with the called party, means for receiving a first service request from a calling party, the first service request being triggered by a state of the UE associated with the called party, wherein the calling party is unable to achieve a live connection with the called party, means for defining a profile of the calling party and a profile of a UE associated with the calling party, means for generating a group of call completion options based on the profiles of the called party, the calling party and the UE associated with the calling party, means associated with the SCP for sending the group of call completions options to the calling party; and means for receiving a second service request from the calling party, wherein the second service request is a selection of one of the group of call completion.

In a third aspect the invention provides a node in a telecommunications network, for providing selective call completion between a calling party and a called party, comprising means for defining a called party profile and a profile of a UE associated with the called party, means for defining a profile of the calling party and a profile of a UE associated with the calling party, receiver means for receiving a first service request from a calling party, the first service request being triggered by a state of the UE associated with the called party wherein the calling party is unable to achieve a live connection with the called party, means for generating a group of call completion options based on the profiles of the called party, the calling party and the UE associated with the calling party, transmission means for sending the group of call completion options to said calling party and means associated with the node for receiving a second service request from the calling party, wherein the second service request is a selection of one of the group of call completion options.

The foregoing has outlined rather broadly the features and technical advantages of the present invention so that those skilled in the art may better understand the detailed description of the invention that follows. Additional features and advantages of the invention will be described hereinafter that form the subject of the claims of the invention. Those skilled in the art should appreciate that they may readily use the conception and the specific embodiment disclosed as a basis for modifying or designing other structures for carrying out the same purposes of the present invention. Those skilled in the art should also realize that such equivalent constructions do not depart from the spirit and scope of the invention in its broadest form.

### Brief description of the drawings

For a more complete understanding of the present invention, and the advantages thereof, reference is now made to the following descriptions taken in conjunction with the accompanying drawings, wherein like numbers designate like objects, and in which:
Figure 1 illustrates a high-level signaling diagram for selective call completion in accordance with a preferred embodiment of the present invention; and
Figure 2 illustrates a high-level block diagram of the core network in which a preferred embodiment of the present invention is incorporated

### Detailed description of the invention

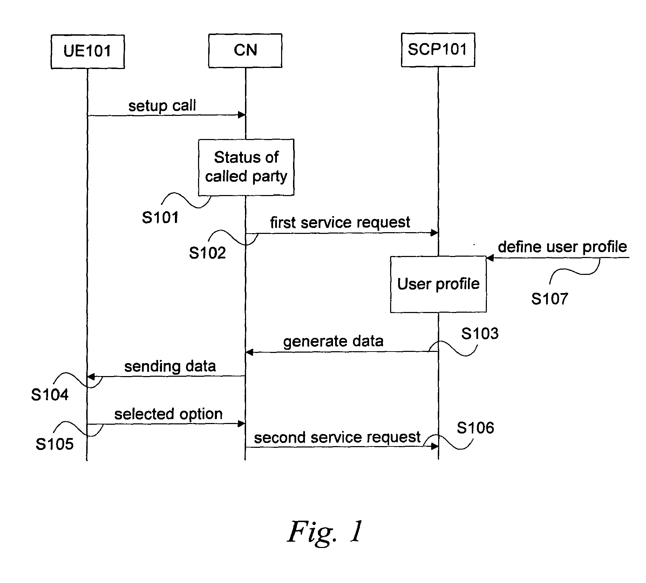

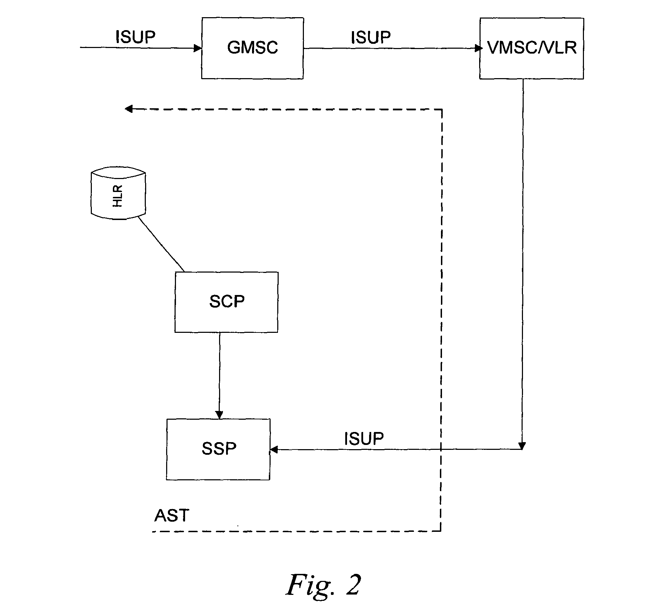

Figure 1 and 2, discussed below, and the various embodiments used to describe the principles of the present invention in this patent document are by way of illustration only and should not be construed in any way to limit the scope of the invention. Those skilled in the art will understand that the principles of the present invention may be implemented in any suitably arranged telecommunications network.

Figure 1 illustrates a high-level signaling diagram for selective call completion in accordance with a preferred embodiment of the present invention. The invention provides a method for selective call completion handling of user equipment implemented in a service control point (SCP101). A calling party's user equipment (UE101) initiates a set up call via telecommunications network CN (Setup call). SCP101 performs the steps of receiving a first service request (S 102) that is triggered based on a called party user equipment state such as "called party is busy", "called party is not reachable", "called party does not answer" (S101). The network CN determines the state of the called party if there is no answer and sends the result to the SCP101 (S102). Depending on which state is received by the SCP101, SCP101 accesses a database, according to the "received state", which contains a group of one or more selectable communication options to be used in a selective call completion menu.

Call completion menu options are generated in accordance with a user profile of the called party and/or calling party and current network conditions that may include why the event was triggered. The operator of the telecommunications network and the network define each party's profile (S107). User profiles contain information such as which call completion options the called party and calling party are subscribed to, reception of SMS, voice mail, and automatic callback. Even though the operator and the network conditions primarily determine the profiles, either user can add, remove or modify certain fields of the respective user's profile by filling-in a protected web page. Other information is used in determining the call completion menu such as: the calling or the called party are roaming; the calling line identification (CLI) of the calling party may be presented; the calling party belongs to the network of the operator of the called party and the terminal capabilities of the calling and the called party. SCP101 generates the data necessary for the user profiles of the calling and called party from the information. The profile data is used to construct a menu, which is sent via Network CN (S 103) to UE101 (S104). In response, the calling party selects an option from the menu and the choice is transmitted via network CN (S105) to SCP101. SCP101 then may send a notification to the called party in accordance with the selected menu option.

In an embodiment of the invention in the Home Location Register (HLR) of the telecommunications network (CN) of the mobile subscriber, a special forwarding number is defined for call forwarding on called party busy, called party not reachable and called party no answer. The special forwarding number may have the format of: country code + operator Id + prefix. The prefix indicates that the call completion menu has to be triggered. When the called party is busy, not reachable or does not answer, the GSM supplementary service may use the special forwarding number to route the call to the service containing the selectable communication options available for the called party. The selectable communication options are generated based on a user profile for the called party. The operator of the telecommunications network and the network condition define the user profile of the called party. The called party may also modify certain fields of the called party user by filling-in a protected web page. The user profile contains information such as to which call completion options the called party is subscribed such as reception of SMS, voice mail and automatic callback. Other information may be contained in the user profile including: whether the calling and/or the called party are roaming, whether presenting the calling line identification (CLI) of the calling party is allowed, whether the calling party belongs to the network of the operator of the called party and the user equipment capabilities of the calling and called party.

Figure 2 illustrates a high-level block diagram of the core network in which a preferred embodiment of the present invention is incorporated. The core network comprises, among other functions, the Gateway Mobile Services switching Centre (GMSC), the Visitor Mobile Services Switching Centre and Visitor Location Centre (VMSC/VLR), the Service Switching Point (SSP) and Service Control Point (SCP). The Core Network (CN) may also comprise, within a telecommunications network system, multiple interconnected networks, an enhanced communication connection comprising a circuit switched connection and a packet-switched connection.

Although the present invention has been described in detail, those skilled in the art should understand that they can make various changes, substitutions and alterations herein without departing from the spirit and scope of the invention in its broadest form.

## Claims

1. A method of selective call completion of a call that could not be established to a user equipment (UE), by a service control point (SCP) in an enhanced telecommunications network (CN) said enhanced network comprising a circuit switched network and a packet-switched network, **characterised in that** said method comprises the steps of:
- defining a called party profile and a profile of a UE associated with the called party;
- defining a profile of the calling party and a profile of a UE associated with the calling party;
- receiving a first service request from a calling party, the first service request being triggered by a state of the UE associated with the called party wherein the calling party is unable to achieve a live connection with the called party;
- generating a group of call completion options based on the profiles of the called party, the calling party and the UE associated with the calling party;
- sending the group of call completion options to said calling party;
- receiving at the SCP a second service request from the calling party, wherein the second service request is a selection of one of the group of call completion options.

2. The method of claim 1, further comprising the step of determining current telecommunications network conditions.

3. The method of claim 1, wherein the step of generating a group of communication options includes incorporating current network conditions data for generating the group of call completion options.

4. The method of claim 1, wherein the step of defining a called party profile and a profile of a UE associated with the called party, further comprises;
- utilizing information regarding called party subscribed telecommunication services;
- current telecommunications network conditions;
- roaming state of the UE associated with the called party and the UE associated with the calling party; and
- capabilities of the UE associated with the called party and the UE associated with the calling party.

5. The method of claim 1, wherein the step of receiving a first service request from a calling party, the request being triggered by a state of the called party's UE indicating an inability to achieve a live connection further comprises, triggering an indication that the called party's equipment is one of:
- busy;
- not answering; and
- not reachable.

6. The method of claim 1, wherein certain fields of the called party profile are available to the called party via a first website for removal or modification and certain fields of the calling party profile are available to the calling party via a second website for removal or modification.

7. The method of claim 1, wherein the generated group of call completion options is sent to the calling party for display on the calling party's UE in the form of a menu.

8. The method of claim 7, wherein the call completion menu is presented to the calling party in at least one format including:
- text display;
- SMS message;
- voice-mail message,
- audio message, and
- automatic callback message.

9. A node in a telecommunications network, for providing selective call completion between a calling party and a called party, comprising:
- means for defining a called party profile and a profile of a UE associated with the called party;
- means for defining a profile of the calling party and a profile of a UE associated with the calling party;
- receiver means for receiving a first service request from a calling party, the first service request being triggered by a state of the UE associated with the called party wherein the calling party is unable to achieve a live connection with the called party;
- means for generating a group of call completion options based on the profiles of the called party, the calling party and the UE associated with the calling party;
- transmission means for sending the group of call completion options to said calling party;
- means associated with the node for receiving a second service request from the calling party, wherein the second service request is a selection of one of the group of call completion options.

10. The node of claim 9, further comprising means for determining current telecommunications network conditions.

11. The node of claim 9, wherein means for generating a group of call completion options includes means for incorporating current network conditions data for generating the group of completion options.

12. The node of claim 9, wherein the means for defining a called party profile and a profile of a UE associated with the called party, further comprises means for incorporating:
- information regarding called party subscribed telecommunication services;
- current telecommunications network conditions;
- roaming state of the called party and the calling party; and
- capabilities of the UE associated with the called and the calling party.

13. The node of claim 9, wherein the means for receiving a first service request from a calling party, further comprises means for triggering an indication that the user equipment is one of:
- busy;
- not answering; and
- not reachable.

14. The node of claim 9, further comprising:
- means for changing certain fields of the called party profile for removal or modification, available to the called party via a first website; and
- means for changing certain fields of the calling party profile for removal or modification, available to the calling party via a second.

15. The node of claim 9, wherein the means for generating a group of call completion options further comprises means for sending the call completion options to the calling party for display on the calling party's UE in the form of a menu.

16. The node of claim 15, wherein means for generating a group of call completion options further comprises means for formatting the call completion menu in at least one format including:
- text display;
- SMS message;
- voice-mail message;
- audio message; and
- automatic callback message.

17. The node of claim 9, wherein the node comprises a Service Control Point (SCP).

18. A system in a telecommunications network for providing selective call completion between a calling party and a called party, comprising:
- a Gateway Mobile Services Switching Center (GMSC);
- a Visitor Mobile Services Switching Centre and a Visitor Location Center (VMSC/VLR);
- a Service Switching Point (SSP) and Service Control Point (SCP), wherein a Core Network (CN) within the telecommunications network system, may also comprise:
- multiple interconnected networks;
- an enhanced communication connection comprising a circuit switched connection and a packet-switched connection;
- means for defining a called party profile and a profile of a User Equipment (UE) associated with the called party;
- means for receiving a first service request from a calling party, the first service request being triggered by a state of the UE associated with the called party, wherein the calling party is unable to achieve a live connection with the called party;
- means for defining a profile of the calling party and a profile of a UE associated with the calling party;
- means for generating a group of call completion options based on the profiles of the called party, the calling party and the UE associated with the calling party;
- means associated with the SCP for sending the group of call completions options to the calling party; and
- means for receiving a second service request from the calling party, wherein the second service request is a selection of one of the group of call completion options.

19. The system of claim 18, further comprising means for determining current telecommunications network conditions.

20. The system of claim 18, wherein means for generating a group of call completion options includes means for incorporating current network conditions data for generating the group of completion options.

21. The system of claim 18, wherein the means for defining a called party profile and a profile of a UE associated with the called party, further comprises means for incorporating:
- information regarding called party subscribed telecommunication services;
- current telecommunications network conditions;
- roaming state of the called party and the calling party; and
- capabilities of the UE associated with the called party and the calling party.

22. The system of claim 18, wherein the means for receiving a first service request from a calling party, further comprises means for triggering an indication that the called party equipment is one of:
- busy;
- not answering; and
- not reachable.

23. The system of claim 18, wherein certain fields of the called party profile are available to the called party for removal or modification via a first website and certain fields of the calling party profile are available to the calling party for removal or modification via a second website.

24. The system of claim 18, wherein the generated group of call completion options is sent to the calling party for display on the calling party's UE in the form of a menu.

25. The system of claim 24, wherein the call completion menu is presented to the calling party in at least one format including:
- text display;
- SMS message;
- voice-mail message;
- audio message, and
- an automatic callback message.

26. The system of claim 18, wherein the node comprises a Service Control Point (SCP).
